# EUROPÄISCHE PATENTSCHRIFT

(11) **EP 1 297 374 B1**
(45) Veröffentlichungstag und Bekanntmachung des Hinweises auf die Patenterteilung: **09.02.2005**
(21) Anmeldenummer: 01965073.8
(22) Anmeldetag: 06.07.2001
(51) Int. Cl.: G02B 21/24, G02B 7/16

(54) **ERKENNUNG DER MAXIMALPOSITION EINES REVOLVERS IN MIKROSKOPEN**
RECOGNITION OF THE MAXIMUM POSITION OF A REVOLVING DIAL ON MICROSCOPES
RECONNAISSANCE DE LA POSITION MAXIMALE D'UN REVOLVER DANS DES MICROSCOPES

(30) Priorität: 06.07.2000 DE 10032395
(43) Veröffentlichungstag der Anmeldung: 02.04.2003
(73) Patentinhaber: CARL ZEISS JENA GmbH, 07745 Jena (DE)
(72) Erfinder: MÖHLER, Gunter, 07745 Jena (DE); RAU, Rolf-Gero, 07747 Jena (DE)
(86) Internationale Anmeldenummer: PCT/EP2001/007768
(87) Internationale Veröffentlichungsnummer: WO 2002/003119

(56) Entgegenhaltungen:
- US-A- 5 337 177
- US-A- 5 737 134
- PATENT ABSTRACTS OF JAPAN vol. 1999, no. 04, 30. April 1999 (1999-04-30) & JP 11 023975 A (NIKON CORP), 29. Januar 1999 (1999-01-29)
- PATENT ABSTRACTS OF JAPAN vol. 016, no. 319 (P-1385), 13. Juli 1992 (1992-07-13) & JP 04 093908 A (OLYMPUS OPTICAL CO LTD), 26. März 1992 (1992-03-26)

## Beschreibung

Die Revolver, beispielsweise zur Aufnahme unterschiedlicher Objektive, die in den Strahlengang eingeschwenkt oder eingeschoben werden, sind in ihren einzelnen Positionen codiert, d.h. jede Position besitzt einen auslesbaren Code .Die Kodierung kann über Mikrotaster oder optisch über Reflexkoppler oder magnetisch über Hall-Sensoren erfolgen.

Bei der Verwendung von Hall-Sensoren werden z.B. jeder Position eine binärkodierte Anzahl von Magneten in einer Reihe zugeordnet, die eindeutig die Position beschreiben (siehe z.B. US 5,737,134).

In jeder Rastposition stehen diese Magneten den Hallsensoren gegenüber und können detektiert werden. Bei wechselbaren Revolvereinheiten z.B. motorische Objektivrevolver (MOR) oder manuelle Objektivrevolver gibt es unterschiedliche Revolver mit z.B. 4,5,6 Positionen. Die Erkennung durch den Mikroprozessor wird bisher über zusätzliche Leitungen, die die Anzahl der maximalen Positionen charakterisieren erreicht oder es wird im Mikroprozessor grundsätzlich ein Wert für die Anzahl der maximalen Positionen abgelegt.

Wird nun nach Aufbau des Mikroskopes der Revolver mit 5 Positionen durch einen Revolver mit 6 Positionen ersetzt, muß die interne Steuerung erkennen, welcher Typ eingebaut ist um dies der Software bzw. der Anzeige mitzuteilen. Der Nachteil bei bekannten Ausführungen besteht in dem Aufwand der zusätzlichen Verdrahtung vom Revolver über die Stativverdrahtung zur Steuerelektronik und Abfrage dieser durch entsprechende Portpins des Mikroprozessors.

Ohne zusätzliche Kabel wird der Typ des Revolvers fest im Programm eingetragen. Eine Änderung hätte dann aber eine Firmware-Änderung zur Folge.

Wird der Typ des Revolvers als Parameter im Mikroprozessor abgelegt, benötigt man außerdem in jedem Fall eine geeignete Eingabemöglichkeit ( z.B. PC → download). Eine weitere Möglichkeit besteht über mögliche Tasten am Mikroskop. Dies erfordert eine Anzeige um die Eingabe zu überprüfen. Um diese Nachteile zu beseitigen wird erfindungsgemäß nur die vorhandene Positionscodierung benötigt. Dies erfolgt folgendermaßen:
Jeder Revolver hat eine codierte Positionserkennung. Um bei einem Wechsel die maximal zu erwartende Position als Parameter in der Firmware des Mikroprozessors abzulegen wird der neue Revolver eingeschoben und die Positionserkennung mit dem Mikroprozessor verbunden. Die Erkennung der Maximalposition wird bei einem manuellen Revolver so erfolgen, daß der Revolver in Ausgangsposition 1 montiert wird , wie es in der Montageanweisung bereits vorgesehen ist.

Im Folgenden werden Ausgangsposition, erste Stellung und Position 1 synonym zueinander verwendet und bezeichnen jeweils die Revolverposition mit der codierten Nummer 1. Als Maximalposition wird die Revolverposition mit der höchsten codierten Nummer bezeichnet, also je nach Art des Revolvers z.B. 4, 5 oder 6.

Wird im eingeschalteten Zustand des Mikroskopes der Revolver manuell um eine Position zurückgedreht so wird die Maximalposition eingestellt. Der Mikroprozessor erkennt die aktuelle Position und vergleicht diese mit der im Speicher eingetragenen Maximalposition. ( siehe Ablaufdiagramm) Ist die aktuelle Position () ungleich der Maximalposition und größer als 2, wird die aktuelle Position in den Systemparametem als Maximalposition eingetragen. Der Test größer als 2 wird benötigt, damit bei eventuell falscher Drehrichtung für die Erkennung kein falscher Wert ermittelt wird. In diesem Fall wird kein Eintrag in die Systemparameter erfolgen. Bei motorischen Revolvern wird der Vorgang in gleicher Weise ausgeführt, nach Einbau wird der Revolver von der Position 1 manuell rückwärts gedreht auf die Maximalposition. Der Eintrag in die Systemparameter geschieht wie oben.

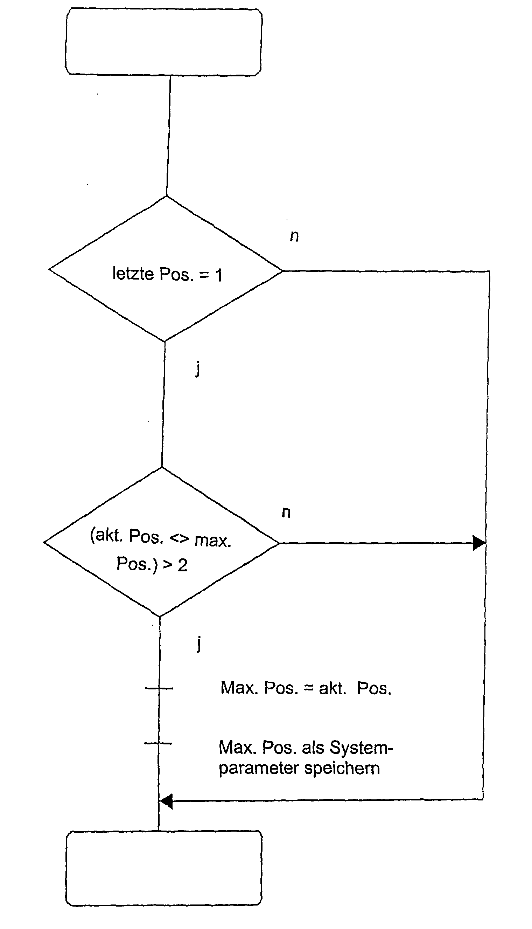

In der Abbildung Fig.1 ist schematisch der geschilderte Ablauf als Flußdiagramm dargestellt. Dieser Ablauf muß so in der Applikation eingebunden werden das er zyklisch ( z.B. mehrmals in einer Sekunde ) durchlaufen wird.

## Patentansprüche

1. Verfahren zur Erkennung der maximalen Anzahl von Positionen eines auswechselbaren Revolvers eines mikroskopischen Systems, wobei jeder auswechselbare Revolver für jede Position, von einer Position 1 bis zu einer Maximalposition einen auslesbaren Code besitzt und das mikroskopische System einen Mikroprozessor mit einem Speicher besitzt, wobei das Verfahren die folgenden Schritte umfaßt:
- Einbau des Revolvers in Position 1
- manuelles Zurückdrehen des Revolvers um eine Position in die Maximalposition
- Erkennung der aktuellen Position und Vergleich mit der vorher gespeicherten Maximalposition
- und Speicherung der aktuellen Position als neue Maximalposition, falls sie von der vorher gespeicherten Maximalposition abweicht.

## Claims

1. Method for recognising the maximum number of positions of a replaceable turret of a microscopic system, wherein each replaceable turret has a readable code for each position, from a position 1 to a maximum position, and the microscopic system has a microprocessor having a memory, wherein the method comprises the following steps:
- assembling the turret in position 1
- manually turning back the turret by one position into the maximum position
- recognising the current position and comparing it with the previously stored maximum position
- and storing the current position as a new maximum position, if the new position is different than the previously stored maximum position.

## Revendications

1. Procédé de reconnaissance du nombre maximal de positions d'un revolver échangeable d'un système microscopique, où chaque revolver échangeable possède pour chaque position, d'une position 1 jusqu'à une position maximale, un code sélectionnable, et le système microscopique possède un microprocesseur avec une mémoire, où le procédé comprend les étapes suivantes :
- montage du revolver en position 1
- rotation manuelle en arrière du revolver d'une position dans la position maximale
- reconnaissance de la position actuelle et comparaison à la position maximale stockée avant
- et stockage de la position actuelle comme nouvelle position maximale dans le cas où elle s'écarte de la position maximale stockée avant.
